# EUROPÄISCHE PATENTSCHRIFT

(11) **EP 0 406 471 B1**
(45) Veröffentlichungstag und Bekanntmachung des Hinweises auf die Patenterteilung: **23.02.1994**
(21) Anmeldenummer: 89112497.6
(22) Anmeldetag: 07.07.1989
(51) Int. Cl.: G21C 3/32, G21C 3/12

(54) **Kernreaktorbrennelement**
Nuclear reactor fuel element
Elément combustible pour réacteur nucléaire

(43) Veröffentlichungstag der Anmeldung: 09.01.1991
(73) Patentinhaber: SIEMENS AKTIENGESELLSCHAFT, 80333 München (DE)
(72) Erfinder: Lippert, Hans-Joachim, Ing. grad., D-8522 Höchstadt (DE)

(56) Entgegenhaltungen:
- EP-A- 0 266 920
- DE-A- 2 824 265
- US-A- 4 659 543

## Beschreibung

Die Erfindung betrifft ein Kernreaktorbrennelement nach dem Oberbegriff des Patentanspruches 1.

Ein derartiges Kernreaktorbrennelement ist aus der deutschen Offenlegungsschrift 28 24 265 bekannt. Sein Brennelementkasten hat quadratischen Querschnitt. Es bildet zusammen mit drei weiteren Kernreraktorbrennelementen, deren Brennelementkästen den gleichen quadratischen Querschnitt haben, eine Gruppe von vier vertikal angeordneten Kernreaktorbrennelementen. Die Oberenden der Brennelementkästen sind in einer quadratischen Masche eines sogenannten oberen Kerngitters im Siedewasserkernreaktor zusammengefaßt. Jedes Kernreaktorbrennelement befindet sich in einer Ecke dieser quadratischen Masche, und sein Brennelementkasten liegt flächig an zwei Seiten dieser quadratischen Masche an diesem oberen Kerngitter an.

Die Winkelteile an der Ecke des Brennelementkastens eines jeden dieser vier Kernreaktorbrennelemente befinden sich im Zentrum der Masche des oberen Kerngitters. Dort berühren sich jeweils zwei gegenüberliegende Blattfedern der Winkelteile von zwei Kernreaktorbrennelementen und gewährleisten so, daß sich zwischen den Brennelementkästen der vier Kernreaktorbrennelemente ein spaltförmiger Zwischenraum mit kreuzförmigem Querschnitt bildet. In diesem Zwischenraum ist ein langgestreckter Steuerstab mit ebenfalls kreuzförmigem Querschnitt in vertikaler Richtung verschiebbar angeordnet.

Die unteren Enden der vier Kernreaktorbrennelemente sind in dem Siedewasserkernreaktor lose, aber zentriert abgestützt, so daß jedes dieser vier Kernreaktorbrennelemente um sein Unterende in jeder Richtung quer zu seiner Längsachse schwenkbar ist.

Der Erfindung liegt die Aufgabe zugrunde, ein Kernreaktorbrennelement zu schaffen, das eine verbesserte Neutronenökonomie in einem Siedewasserkernreaktor bewirkt.

Zur Lösung dieser Aufgabe hat ein Kernreaktorbrennelement der eingangs erwähnten Art erfindungsgemäß die Merkmale des kennzeichnenden Teiles des Patentanspruches 1.

Dadurch ist gewährleistet, daß der in der Regel aus Zirkoniumlegierung bestehende Brennelementkasten verhältnismäßig wenig neutronenabsorbierenden Werkstoff in den Siedewasserkernreaktor einbringt. Zugleich können aber die Abmessungen der Überhöhungen am Oberende des Brennelementkastens so gewählt werden, daß vier Kernreaktorbrennelemente mit gleichartigem Brennelementkasten in der Masche eines in einem Kernreaktor bereits vorgegebenen oberen Kerngitters angeordnet sind, in dieser Masche nicht kippen und dadurch die Funktionsfähigkeit des zwischen ihnen angeordneten Steuerstabes beeinträchtigen.

Die Patentansprüche 2 bis 5 sind auf vorteilhafte Ausbildungen des Kernreaktorbrennelementes gerichtet, durch die der Brennelementkasten günstig gefertigt werden kann.

Die Erfindung und ihre Vorteile seien anhand der Zeichnung an Ausführungsbeispielen näher erläutert:
FIG 1 zeigt in perspektivischer Ansicht eine Masche eines oberen Kerngitters in einem Siedewasserkernreaktor.
FIG 2 zeigt im Längsschnitt entsprechend der strichpunktierten Linie II-II in FIG 3 die Unterenden von zwei in der Masche nach FIG 1 angeordneten Kernreaktorbrennelementen.
FIG 3 zeigt in Draufsicht einen in FIG 2 erkennbaren Gußkörper.
FIG 4 zeigt in perspektivischer Ansicht eine Ecke am Oberende eines Brennelementkastens für ein in die Masche des oberen Kerngitters nach FIG 1 einsetzbares Kernreaktorbrennelement.
FIG 5 zeigt in Seitenansicht einen Brennelementkasten für ein in die Masche des oberen Kerngitters nach FIG 1 einsetzbares Kernreaktorbrennelement.

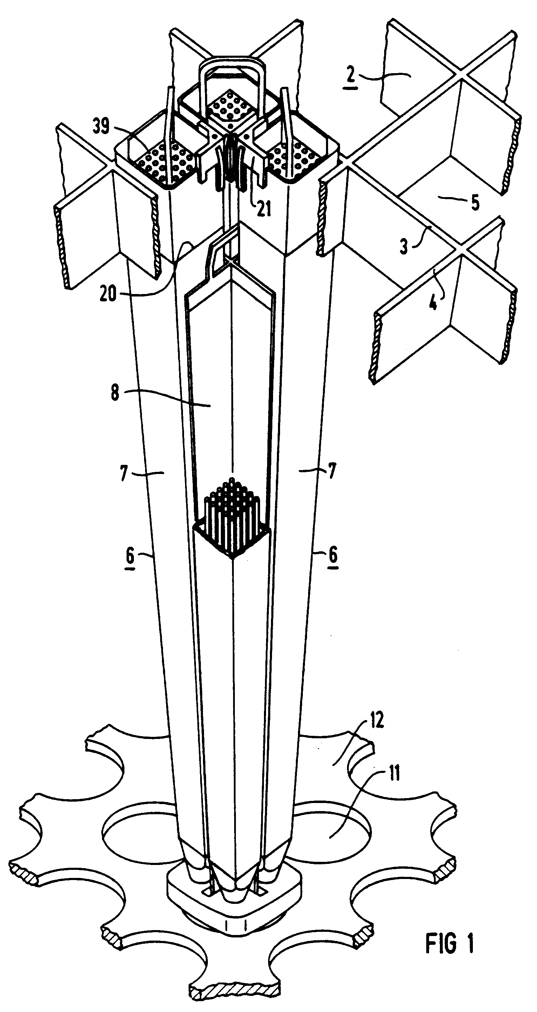

Das in FIG 1 dargestellte obere Kerngitter 2 setzt sich aus hochkant angeordneten, sich rechtwinklig durchsetzenden Stegen 3 und 4 zusammen, die quadratische Maschen 5 bilden. Dieses obere Kerngitter 2 ist horizontal im Kern eines Siedewasserkernreaktors angeordnet.

Eine Masche 5 des oberen Kerngitters 2 umschließt jeweils vier vertikal angeordnete Kernreaktorbrennelemente 6, von denen jedes einen gleich ausgebildeten langgestreckten Brennelementkasten 7 mit quadratischem Querschnitt aufweist, der mit Kernbrennstoff gefüllte Brennstäbe, eine Kopfplatte 39 und eine Fußplatte 13 umhüllt. Jedes der Kernreaktorbrennelemente 6 ist in einer Ecke der Masche 5 angeordnet, so daß die Brennelementkästen 7 dieser Kernreaktorbrennelemente 6 einen spaltförmigen Zwischenraum mit kreuzförmigem Querschnitt bilden, in dem ein langgestreckter Steuerstab 8 mit ebenfalls kreuzförmigem Querschnitt in vertikaler Richtung verschiebbar angeordnet ist.

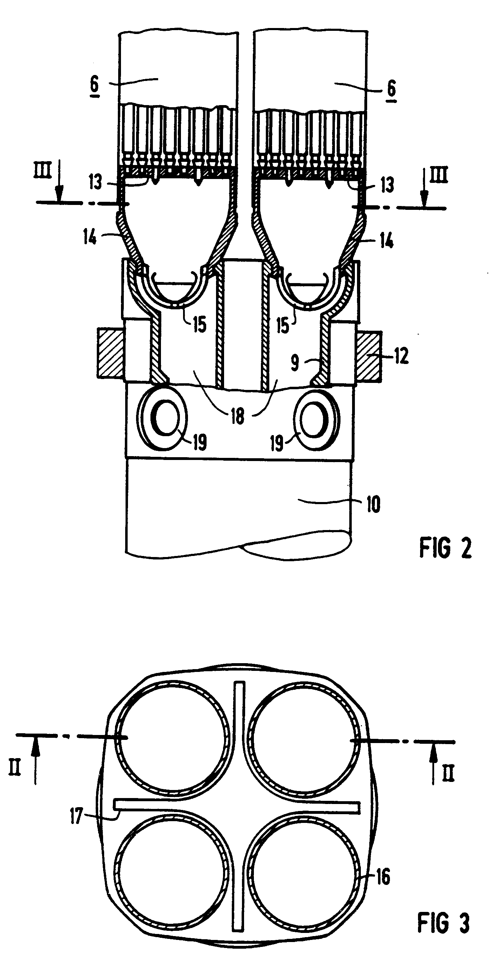

Die unteren Enden der vier Kernreaktorbrennelemente 6 ruhen auf einem in FIG 2 dargestellten Stützkörper 9. Dieser Stützkörper 9 ist ein Gußkörper aus Stahl und befindet sich im Oberende eines vertikal angeordneten Steuerstabführungsrohres 10, das mit seinem Oberende eine Durchführung 11 in einer in FIG 1 erkennbaren Kerngitterplatte 12 durchgreift. Diese Kerngitterplatte 12 ist im Siedewasserkernreaktor vertikal unterhalb des oberen Kerngitters 2 angeordnet und parallel zu diesem oberen Kerngitter 2. Die Führungsrohre 10 sind der besseren Übersicht halber in FIG 1 nicht dargestellt.

Wie FIG 2 ferner zeigt, bilden die Kernreaktorbrennelemente 6 unten an ihrer Fußplatte 13 einen hohlen Kegelstumpf 14 mit nach unten aufgesetzter Kalotte 15. Jedes der Kernreaktorbrennelemente 6 greift mit dem hohlen Kegelstumpf 14 in eine kreisrunde Öffnung 16 in der Oberseite des Stützteiles 9 lose, aber zentriert. Die Öffnungen 16 sind in Draufsicht in FIG 3 zu erkennen. Das Stützteil 9 hat zwischen den vier Öffnungen 16 eine Durchtrittsöffnung 17 mit kreuzförmigem Querschnitt für den Steuerstab 8. Ferner befinden sich im Stützteil 9 an den Öffnungen 16 Kanäle 18, die durchgehend sind vom Unterende des Stützteiles 9 bis zu dessen Oberende. Auch die Kalotten 15 weisen breite Durchtrittsspalte auf, und im Mantel des Steuerstabführungsrohres 10 sind mit Blenden versehene Seitenöffnungen 19 vorgesehen. Im Siedewasserkernreaktor kann also Wasser aus dem Steuerstabführungsrohr 10 und durch die Seitenöffnungen 19 hindurch in die Kanäle 18 des Stützteiles 9 aufsteigen und durch die Durchtrittsspalte in den Kalotten 15 und die hohlen Kegelstümpfe 14 sowie durch Durchführungen in den Fußplatten 13 der Kernreaktorbrennelemente 6 hindurch in die Kernreaktorbrennelemente 6 gelangen und diese von unten nach oben durchfließen. Zugleich sind diese Kernreaktorbrennelemente 6 in den Öffnungen 16 des Stützteiles 9 quer zur Längsachse dieser Kernreaktorbrennelemente 6 schwenkbar lose abgestützt und zentriert.

Am Oberende der Kernreaktorbrennelemente 6 bilden die Brennelementkästen 7 auf allen vier Außenseiten flache und gleichhohe Abstufungen 20. Mit den Abstufungen 20 von zwei benachbarten Seiten der Brennelementkästen 7 liegt jedes der vier Kernreaktorbrennelemente 6 innerhalb der Masche des Kerngitters 2 flächig an einem Steg 3 und 4 des Kerngitters 2 an. An den Abstufungen 20 der beiden anderen Seiten der Brennelementkästen 7 liegt jeweils ein Winkelteil 21 an, das an einem Quersteg 22 des betreffenden Brennelementkastens 7 außen an der Ecke des Brennelementkastens 7 befindlich festgeschraubt ist.

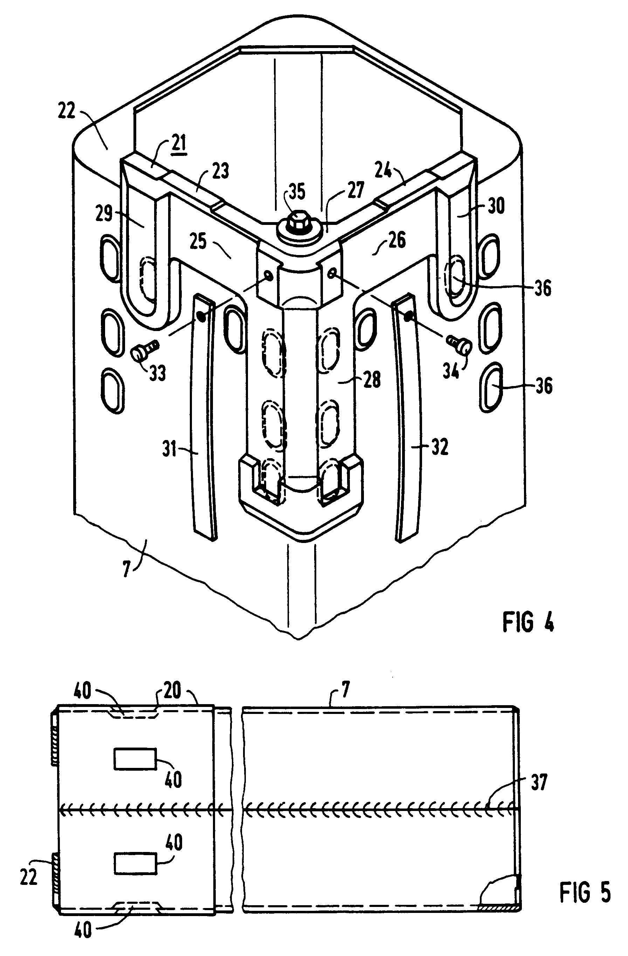

Ein solches Winkelteil 21 ist in FIG 4 deutlicher erkennbar. Es weist zwei zueinander rechtwinklige, gleichlange Schenkel 23 und 24 auf. An der gleichen Seite dieser Schenkel 23 und 24 befinden sich Wandungen 25 und 26, die in einem Scheitelsteg 27 der Schenkel 23 und 24 zueinander und zum Scheitelsteg 27 rechtwinklig sind. Die Wandungen 25 und 26 bilden im Scheitelsteg 27 ein zu den Schenkeln 23 und 24 rechtwinkliges langgestrecktes L-Profil 28, während sie an den Enden der Schenkel 23 und 24 jeweils zu einem starren, sich nach außen erhebenden Anlagennoppen 29 und 30 ausgeformt sind.

Außen am L-förmigen Profil 28 ist auf beiden Wandungen 25 und 26 je eine langgestreckte Blattfeder 31 und 32 in Richtung des L-Profils 28 angeordnet und jeweils an einem Ende mit einer Schraube 33 und 34 am Winkelteil 2 so befestigt, daß sie sich nach außen von der Außenseite des L-Profils 28 wegwölbt. Mit einem Schraubbolzen 35 ist das Winkelteil derart an einem Quersteg 22 des Brennelementkastens 7 festgeschraubt, daß die Wandungen 25 und 26 mit ihren Innenseiten flächig an den gleichhohen Abstufungen 20 außen an zwei benachbarten Seiten des betreffenden Brennelementkastens 7 in der Masche des oberen Kerngitters 2 nach FIG 1 anliegen.

Die Blattfedern 31 bzw. 32 an zwei sich gegenüberliegenden Seiten von jeweils zwei Kernreaktorbrennelementen 7 in einer Masche des oberen Kerngitters 2 nach FIG 1 liegen unter Vorspannung aneinander an. Obwohl die Wandungen der Brennelementkästen 7 der Kernreaktorbrennelemente 6 in FIG 1 besonders dünn ausgeführt sind, bewirken die Abstufungen 20 an den Oberenden dieser Brennelementkästen, daß die Blattfedern 31 bzw. 32 der Winkelteile 21 im Zentrum der Masche des oberen Kerngitters 2 die vier Kernreaktorbrennelemente 6 in dieser Masche mit genau vertikal angeordneter Längsachse fixieren. Deshalb hat auch der für den Steuerstab 8 bestimmte Zwischenraum zwischen den vier Kernreaktorbrennelementen 7 eine genau vertikale Längsachse. Der Steuerstab 8 kann daher in diesem Zwischenraum nicht verklemmen.

Wie FIG 4 zeigt, können anstelle der Abstufungen 20 am Oberende des Brennelementkastens 7 an den Außenseiten auch nach außen gerichtete, gleichhohe lokale Prägestellen 36 vorgesehen sein, an denen die Wandungen 25 und 26 des Winkelteils 21 und in der Masche des oberen Kerngitters 2 nach FIG 1 die Stege 3 und 4 dieses oberen Kerngitters 2 flächig anliegen. Die Prägestellen 36 sind besonders günstig am Brennelementkasten 7 herstellbar.

Nach FIG 5 kann ein Brennelementkasten 7 z.B. mit quadratischem Querschnitt und einer in Längsrichtung verlaufenden Schweißnaht 37 an einer Abstufung 20 in den Außenseiten am Oberende eine vergrößerte Innenweite haben. Diese Abstufung 20 kann günstig in das Ausgangsblech für den Brennelementkasten 7 eingeprägt werden, bevor dieses Ausgangsblech zum Brennelementkasten 7 gebogen und an zwei aneinanderstoßenden Endkanten unter Ausbildung der Schweißnaht 37 verschweißt wird. Günstigerweise hat der Brennelementkasten 7 an den Abstufungen 20 nach innen gerichtete Prägestellen 40, an denen die Kopfplatte 39 des Kernreaktorbrennelementes 6 mit ihren Seitenflächen anliegt.

## Patentansprüche

1. Kernreaktorbrennelement mit Brennstäben, die Kernbrennstoff enthalten, die in Durchführungen in einer Kopf- und in einer Fußplatte geführt sind und von denen zumindest ein Teil in diesen Durchführungen befestigt ist, mit einem langgestreckten Brennelementkasten, der einen rechteckigen, insbesondere quadratischen Querschnitt hat, der die Kopf- und die Fußplatte mit den Brennstäben umschließt und der mit einem Oberende an der Kopfplatte befestigt ist, sowie mit einem dem Brennelementkasten angepaßten Winkelteil, das am Oberende des Brennelementkastens an einer Ecke angebracht ist, an zwei benachbarten Außenseiten des Brennelementkastens anliegt und an diesen beiden Außenseiten des Brennelementkastens außen mit je einer sich in Kastenlängsrichtung erstreckenden Blattfeder vesehen ist,
**dadurch gekennzeichnet,**
daß die Außenseiten des Brennelementkastens (7) an dessen Oberende gleich hohe Überhöhungen aufweisen und daß das Winkelteil (21) an solchen Überhöhungen in den beiden Außenseiten des Brennelementkastens (7) anliegt.

2. Kernreaktorbrennelement nach Anspruch 1,
**dadurch gekennzeichnet,**
daß die Überhöhungen durch eine Abstufung (20) in den Außenseiten des Brennelementkastens (7) gebildet sind.

3. Kernreaktorbrennelement nach Anspruch 1,
**dadurch gekennzeichnet,**
daß die Überhöhungen durch nach außen gerichtete Prägestellen (36) gebildet sind.

4. Kernreaktorbrennelement nach Anspruch 2,
**dadurch gekennzeichnet,**
daß der Brennelementkasten (7) an den Abstufungen (20) eine vergrößerte Innenweite hat.

5. Kernreaktorbrennelement nach Anspruch 4,
**dadurch gekennzeichnet,**
daß der Brennelementkasten (7) an den Abstufungen (20) nach innen gerichtete Prägestellen (40) hat, an denen die Kopfplatte (39) anliegt.

## Claims

1. Nuclear reactor fuel element having fuel rods which contain nuclear fuel and are guided in bushings in a top plate and a base plate and at least some of which are secured in these bushings, having an elongated fuel element casing which has a rectangular cross section, in particular a square cross section, which surrounds the top plate and the base plate having the fuel rods and which is secured to the top plate at an upper end, as well as an angle part adapted to the fuel element casing, which angle part is attached to the upper end of the fuel element casing at one corner, bears against two adjacent outer sides of the fuel element casing and is provided on these two outer sides of the fuel element casing with a respective leaf spring extending in the longitudinal direction of the casing, characterised in that the outer sides of the fuel element casing (7) have superelevations of equal height at the upper end of the said casing and in that the angle part (21) bears against superelevations of this type formed in the two outer sides of the fuel element casing (7).

2. Nuclear reactor fuel element according to claim 1, characterised in that the superelevations are formed by a graduation (20) in the outer sides of the fuel element casing (7).

3. Nuclear reactor fuel element according to claim 1, characterised in that the superelevations are formed by outwardly directed embossed places (36).

4. Nuclear reactor fuel element according to claim 2, characterised in that the fuel element casing (7) has an enlarged internal width at the graduations (20).

5. Nuclear reactor fuel element according to claim 4, characterised in that the fuel element casing (7) has embossed places (40) facing inwards on the graduations (20), with the top plate (39) bearing against these embossed places.

## Revendications

1. Assemblage combustible de réacteur nucléaire, comprenant des crayons combustibles qui contiennent de la matière combustible nucléaire, qui passent dans des traversées d'une plaque de tête et d'une plaque de pied et dont au moins une partie est fixée dans ces traversées, un caisson d'assemblage combustible oblong qui a une section transversale rectangulaire, notamment carrée, qui entoure la plaque de tête et la plaque de pied avec les crayons combustibles et qui est fixé par l'extrémité supérieure à la plaque de tête, ainsi qu'une équerre qui est adaptée au caisson d'assemblage combustible, qui est montée par un sommet à l'extrémité supérieure du caisson d'assemblage combustible, qui s'applique à deux faces extérieures voisines du caisson d'assemblage combustible et qui est munie, sur ces deux faces extérieures du caisson d'assemblage combustible, à l'extérieur, d'un ressort à lame s'étendant dans la direction longitudinale du caisson,
caractérisé
en ce que les faces extérieures du caisson (7) d'assemblage combustible comportent, a son extrémité supérieure, des surélévations de même hauteur, et en ce que l'équerre (21) s'applique sur ces surélévations des deux faces extérieures du caisson (7) d'assemblage combustible.

2. Assemblage combustible de réacteur nucléaire suivant la revendication 1,
caractérisé
en ce que les surélévations sont constituées par un épaulement (20) des faces extérieures du caisson (7) d'assemblage combustible.

3. Assemblage combustible de réacteur nucléaire suivant la revendication 1,
caractérisé
en ce que les surélévations sont formées par des points d'estampage (36) dirigés vers l'extérieur.

4. Assemblage combustible de réacteur nucléaire suivant la revendication 2,
caractérisé
en ce que le caisson (7) d'assemblage combustible a, aux épaulements (20), une dimension intérieure agrandie.

5. Assemblage combustible de réacteur nucléaire suivant la revendication 4,
caractérisé
en ce que le caisson (7) d'assemblage combustible a sur les épaulements (20) des points d'estampage (40) qui sont dirigés vers l'intérieur et sur lesquels s'applique la plaque de tête (39).
